# EUROPÄISCHE PATENTSCHRIFT

(11) **EP 2 019 767 B1**
(45) Veröffentlichungstag und Bekanntmachung des Hinweises auf die Patenterteilung: **03.10.2012**
(21) Anmeldenummer: 07728480.0
(22) Anmeldetag: 25.04.2007
(51) Int. Cl.: B60T 10/02

(54) **VERFAHREN UND VORRICHTUNG ZUR EINSTELLUNG UND ANSTEUERUNG EINES HYDRODYNAMISCHEN RETARDERS EINES KRAFTFAHRZEUGES**
METHOD AND DEVICE FOR SETTING AND ACTIVATING A HYDRODYNAMIC RETARDER OF A MOTOR VEHICLE
PROCÉDÉ ET DISPOSITIF POUR L'AJUSTEMENT ET LA COMMANDE D'UN RALENTISSEUR HYDRODYNAMIQUE D'UN VÉHICULE AUTOMOBILE

(30) Priorität: 23.05.2006 DE 102006024011
(43) Veröffentlichungstag der Anmeldung: 04.02.2009
(73) Patentinhaber: ZF Friedrichshafen AG, 88038 Friedrichshafen (DE)
(72) Erfinder: GRUPP, Bernhard, 88250 Weingarten (DE); REISCH, Bernhard, 88316 Isny (DE); RONGE, Ludger, 88097 Eriskirch (DE); SAUTER, Frank, 88074 Meckenbeuren (DE); SCHMIDTNER, Peter, 88131 Lindau (DE)
(86) Internationale Anmeldenummer: PCT/EP2007/054024
(87) Internationale Veröffentlichungsnummer: WO 2007/134939

(56) Entgegenhaltungen:
- EP-A- 1 288 093
- WO-A-03/020562
- WO-A-2005/066006
- DE-A1- 10 140 220
- DE-A1- 10 141 794
- DE-A1- 10 361 448
- DE-A1- 19 929 152
- DE-A1-102004 048 121
- DE-A1-102005 021 718

## Beschreibung

Die Erfindung betrifft ein Verfahren und eine Vorrichtung zur Einstellung und Ansteuerung eines hydrodynamischen Retarders eines Kraftfahrzeuges gemäß dem Oberbegriff des Patentanspruchs 1 bzw. des Patentanspruchs 17.

Hydrodynamische Retarder werden in Kraftfahrzeugen, vorzugsweise in Nutzfahrzeugen, als zusätztiche verschleißfreie Dauerbremseinrichtungen zur Entlastung der üblicherweise als Reibungsbremsen ausgebildeten Radbremsen eingesetzt. Beispielsweise bei Bremsvorgängen aus hoher Geschwindigkeit, bei Fahrzeugen mit hohem Gesamtgewicht und bei längeren Bergabfahrten vermindern Retarder den Verschleiß und verhindern eine thermische Überlastung der Reibungsbremsen. Zusätzlich wird auch der Bremskomfort durch Anpassungsbremsungen, beispielsweise das Konstanthalten der Geschwindigkeit im Gefälle verbessert.

Bei hydrodynamischen Retardern wird die mechanische Energie einer Antriebswelle in kinetische Energie einer Flüssigkeit, in der Regel ein Öl, umgewandelt, wobei das physikalische Wirkprinzip dem einer hydrodynamischen Kupplung entspricht, die ein von einem Verbrennungsmotor angetriebenes Pumpenrad als Antrieb und ein Turbinenrad als Abtrieb aufweist, wobei die Turbine jedoch feststeht. Demnach weist ein hydrodynamischer Retarder einen sich im Leistungsfluss befindlichen Rotor und einen mit einem Retardergehäuse fest verbundenen Stator mit einer Beschaufelung auf. Beim Betätigen des Retarders wird eine der gewünschten Bremsleistung entsprechende Ölmenge in den Retarderraum eingebracht. Der Ölfluss wird dabei meist über ein elektrisches Proportional-Ventil, dessen Proportional-Magnet entsprechend bestromt wird, geregelt. Im Retarderraum nimmt der sich drehende Rotor das Öl mit, das sich an der Statorbeschaufelung, unter Umwandlung kinetischer Strömüngsenergie in Wärme, abstützt, wodurch eine Bremswirkung auf den Rotor und dessen antreibende Welle sowie damit eine Abbremsung des gesamten Fahrzeuges erzeugt wird.

Ein derartiger hydrodynamischer Retarder ist beispielsweise aus der DE 101 40 220 A1 bekannt. Zur Steuerung des Retarders ist ein Arbeitskreislauf (Retarderkreis) vorgesehen, welcher eine durch einen regelbaren Elektromotor antreibbare Hydraulikpumpe, einen Wärmetauscher zur Kühlung, eine Ventileinrichtung mit Ein- und Auslassventil sowie einem Regel- oder Schaltventil und eine Steuer- und Regeleinheit zur Pumpen- und Ventilsteuerung umfasst. Die Anordnung ermöglicht eine Regelung, die unabhängig von der aktuellen Fahrzeuggeschwindigkeit bzw. Gelenkwellendrehzahl oder Retarderdrehzahl einstellbar ist. Eine vergleichbare Anordnung ist auch noch aus der DE 101 41 794 A1 bekannt.
Aus DE 102004048121 A1 ist ein Verfahren zur Anpassung Ist-und Sollkennlinien eines Retarders bei Endabnahme bekannt.

Das Bremsmoment hydrodynamischer Retarder wird üblicherweise dadurch eingestellt, dass im Retarderkreis ein entsprechender Druck eingestellt wird, der über eine Steuer- und Regeleinheit vorgegeben wird. Der Zusammenhang zwischen einer entsprechenden Stellgröße der Steuer- und Regeleinheit, beispielsweise einem Strom am Proportional-Ventil und dem daraus resultierenden Bremsmoment, wird beispielsweise über ein Kennfeld hergestellt. Das resultierende Retarder-Bremsmoment entspricht einem Punkt auf einer Bremskennlinie, bzw. Bremsmomentkennlinie, in der das Retarder-Bremsmoment gegen die durch den Antrieb des Retarder-Rotors vorgegebene RetarderDrehzahl aufgetragen ist.

Ein grundlegendes Problem dabei ist die Genauigkeit des eingestellten Bremsmoments. Die Ursachen hierfür liegen im Wesentlichen in der Qualität der Beschaufelungen des Retarders, den Toleranzen der ölführenden Gehäuse und den Toleranzen mechanischer Stellglieder (Aktuatoren, Regelkolben, Federelemente etc.).

Um Abweichungen des tatsächlichen Bremsmoments des jeweiligen Aggregates von einem Soll-Moment zu minimieren, ist es bekannt, das Bremsmoment des Retarders an einem Serienprüfstand zu überprüfen. Entsprechend der Abweichung eines gemessenen Ist-Moments zum Soll-Moment werden Korrekturen vorgenommen, um die Bremskennlinie des Retarders möglichst genau zu verifizieren. Dies kann durch Messen des Bremsmoments am Prüfstand und Korrektur des Bremsmoments mittels eines Einstellelementes, beispielsweise einer Einstellschraube oder durch Messen des Bremsmoments am Prüfstand und eine alternative Auswahl eines von mehreren in der elektronischen Steuerung abgelegten Kennfelder über Widerstände oder Kodierschalter realisiert werden.

Mit diesen bekannten Mitteln, die bei einem Prüflauf für jedes einzelne Aggregat angepasst werden, lässt sich das Bremsmoment jedoch nur unzureichend genau und sehr global (ein Einstellpunkt für den gesamten Arbeitsbereich) abgleichen. Andererseits steigen die Anforderungen an die Einstellgenauigkeit des Bremsmomentes bzw. an die Genauigkeit einer Rückmeldung, wie hoch das aktuell eingestellte Bremsmoment ist, durch die zunehmende Integration von Retardern in andere Systeme, beispielsweise in elektronische Bremssysteme, die ein Bremsmoment beim Retarder zur Unterstützung anfordern.

Eine Verbesserung zur Erhöhung der Genauigkeit ist in der nicht veröffentlichten DE 10 2005 021 718 A1 beschrieben. Dabei wird ein elektronischer Abgleich am Prüfstand durchgeführt, bei dem jedes einzelne Aggregat am Prüfstand hinsichtlich einer Bremskennlinie vermessen und die erforderlichen Korrekturwerte in einem nicht-flüchtigen Speicher der elektronischen Steuerung abgelegt werden. Dies wird durch einzelne Offsets (Anhebungen/Absenkungen) der Stellgröße, die an verschiedenen Stützpunkten der Bremskennlinie gesetzt werden, realisiert.

Nachteilig daran ist, dass die Korrektur dabei eher empirisch erfolgt, wobei insbesondere der für die Funktionsweise des Retarders wesentliche hydraulische Druck im Arbeitskreis nicht explizit betrachtet wird.

In der WO 2003 020 562 A1 ist ein Verfahren beschrieben, bei dem der Öldruck im Arbeitskreis des Retarder gemessen, daraus ein Bremsmoment abgeleitet und dieses Bremsmoment mit einem Wunsch-Bremsmoment verglichen wird. Das Wunsch-Bremsmoment entspricht üblicherweise der Position eines Bedienelements (z.B. Bremspedal) und wird immer durch den Fahrer initiiert. Eine ermittelte Abweichung des erzeugten Bremsmoments zum Wunsch-Bremsmoment kann ausgeregelt werden. Zur Verbesserung der Regelgüte kann eine Adaption erfolgen, bei der die ermittelten Abweichungen von vorangegangenen Aktivierungen gespeichert und bei erneuten Aktivierungen verwendet werden. Zusätzlich zur Ausregelung von Druckabweichungen in Bezug zum Wunsch-Bremsmoment des Fahrers kann auch bei Überschreiten einer definierten Schwelle eine Warnung an den Fahrer ausgegeben werden. Dies kann bei Fehlern an Komponenten oder bei zu niedrigem Ölstand im Retarder auftreten.

Nachteilig daran ist, dass für den Abgleich des aus dem gemessenen Ist-Druck berechneten Bremsmomentes nur der Fahrerwunsch bzw. eine dem entsprechende momentane Einstellung eines Bedienelementes ausschlaggebend ist. Diese Ausregelung kann von einer für den Retarder günstigen Bremskennlinie abweichen, welches insbesondere in elektronischen Bremssystemen eine eher ineffektive Ausnutzung des Retarders zur Folge haben kann. Zudem hängt die Genauigkeit der Regelung wesentlich von der Einstellgenauigkeit des entsprechenden Bedienelementes, beispielsweise eines Bremspedals ab. Ist dieses mit einer relativ großen Fertigungstoleranz behaftet oder ändern sich Einstellparameter des Bedienelementes im Laufe der Zeit, so ist eine gleich bleibend hohe Genauigkeit bei der Einstellung nach dem Fahrerwunsch nicht ohne weiteres zu gewährleisten.

Weiterhin sind hydrodynamische Retarder mit pneumatischen Steuerungssystemen bekannt, bei denen der hydraulische Druck im Arbeitskreis über einen pneumatischen Stelldruck, der auf den Ölspiegel im Retarderraum wirkt, eingestellt wird.

Aus der DE 199 29 152 A1 ist ein derartiges pneumatisches Steuerungssystem bekannt, bei dem ein pneumatischer Stelldruck gemessen wird. Mit Hilfe dieses gemessenen pneumatischen Drucks und einem vom Fahrer vorgegebenen Wert, also dem aktuellen Fahrerwunsch nach einem bestimmten Bremsmoment, kann eine Soll-Ist-Abweichung bestimmt und ausgeregelt werden. Des Weiteren ist es möglich, einen fehlerhaft zu hohen Stelldruck aufgrund einer Störung an einer Ventileinrichtung des pneumatischen Systems zu erkennen und mit Hilfe eines (weiteren) Schaltventils in der Luft-Versorgungsleitung das gesamte Retarder-System gegebenenfalls zu deaktivieren.

Aus der DE 103 61 448 A1 ist ein weiteres pneumatisches Steuerungssystem für einen Retarder bekannt. Darin wird ein Verfahren beschrieben, bei dem mittels eines in einem pneumatischen Stelldruck-Regelkreis installierten Drucksensors der Verlauf des pneumatischen Stelldrucks des Retarders gemessen wird. Dieser gemessene zeitliche Druckverlauf wird dann mit gespeicherten Soll-Kennlinien (Vorwarn- und Stilllegungskennlinie) verglichen und bei Nicht-Erfüllung von vorgegebenen Kriterien eine Warnmeldung ausgegeben und/oder ein zukünftiges Einschalten des Retarders durch den Bediener, also den Fahrzeugführer, verhindert. Dabei werden die dynamischen Druckverläufe beim Ein- oder Ausschalten des Retarders sowie optional auch der Verlauf bei einer Bremsmomentänderung auf ein vorgewähltes Ziel-Bremsmoment überwacht. Die verwendeten Kennlinien können während der Konstruktion des Retarder-Systems berechnet oder durch Versuch ermittelt werden, oder auch zu Beginn der Fahrzeugbetriebszeit eingelernt werden. Neben dem Vergleich des zeitlichen Verlaufes können auch die gemessene Zeitspanne zwischen zwei vorgegebenen Druckpunkten oder ein Stelldruckverlaufsgradient verglichen werden.

Nachteilig bei den pneumatischen Retarder-Steuerungssystemen ist der zusätzliche relativ hohe Kosten- und Konstruktionsaufwand für das Pneumatiksystem. Zudem zeigen die bekannten derartigen Systeme ein eher begrenztes Regelverhalten.

Vor diesem Hintergrund liegt der Erfindung die Aufgabe zugrunde, ein Verfahren zur Einstellung und Ansteuerung eines hydrodynamischen Retarders anzugeben, das die Einstellgenauigkeit des Bremsmomentes verbessert, kostengünstig ist und die erwähnten Nachteile des Standes der Technik vermeidet.

Die Lösung dieser Aufgabe ergibt sich aus den Merkmalen der unabhängigen Ansprüche, während vorteilhafte Ausgestaltungen und Weiterbildungen der Erfindung den jeweils zugeordneten Unteransprüchen entnehmbar sind.

Der Erfindung liegt die Erkenntnis zugrunde, dass mit der Möglichkeit die Genauigkeit der Druckeinstellung im Retarder zu verbessern, auch die Genauigkeit des resultierenden Bremsmomentes verbessert werden kann. Dies gelingt im Wesentlichen dadurch, dass schon vorab eine Voreinstellung am Retarder vorgenommen wird, die den Druck als Korrekturwert für eine Stellgröße des Retarders einbezieht.

Demnach geht die Erfindung zunächst aus von einem Verfahren zur Einstellung und Ansteuerung eines hydrodynamischen Retarders eines Kraftfahrzeuges, bei dem der Retarder einen regelbaren Hydraulikkreis sowie Mittel zur Erfassung des hydraulischen Drucks in dem Hydraulikkreis aufweist, und bei dem wenigstens eine Voreinstellung zur Erzeugung eines einer vorgegebenen Bremsmomentkennlinie folgenden Bremsmomentes erfolgt, die in einer Steuer- und Regeleinheit dauerhaft abgespeichert wird, und mit deren Hilfe der Retarder im Fahrbetrieb angesteuert wird. Zur Lösung der gestellten Aufgabe sieht die Erfindung außerdem vor, dass wenigstens bei der Voreinstellung der hydraulische Druck in dem Hydraulikkreis des Retarders berücksichtigt wird.

Die Verwendung des hydraulischen Drucks im Arbeitskreis des Retarders stellt die Basis für eine genauere Einstellung bzw. Ermittlung des Bremsmomentes dar. Dabei wird über eine Stellgröße ein Druck eingestellt, der in Kombination mit der Drehzahl des Retarders zu einem bestimmten Bremsmoment führt. Dazu wird ein aggregatespezifischer hydraulischer Soll-Druck ermittelt, der in der Steuer- und Regeleinheit abgelegt wird. Dies hat den Vorteil, dass weder ein pneumatisches Steuerungssystem erforderlich ist, noch ein Abgleich mit dem Fahrerwunsch im Fahrbetrieb ausgewertet werden muss.

In hydrodynamischen Retardern, in denen schon ein Drucksensor zur Druckregelung im Arbeitskreis vorhanden ist, können dessen Sensorinformationen für das erfindungsgemäße Verfahren verwendet werden, um die Vorabeinstellung vorzunehmen, welches besonders kostengünstig ist.

Außerdem kann vorgesehen sein, dass vorzugsweise im Fahrbetrieb ein Abgleich zwischen der in der Steuer- und Regeleinheit abgelegten Voreinstellung und einem aktuell im Hydraulikkreis des Retarders gemessenen hydraulischen Ist-Druck, erfolgt. In der Voreinstellung wird ein Soll-Druck ermittelt, der bereits die Genauigkeit der Stellgröße signifikant verbessert.

Durch einen Abgleich dieses in der Voreinstellung ermittelten Soll-Drucks mit dem aktuell gemessenen Ist-Druck und einer Ausregelung einer eventuell vorhandenen Abweichung, kann die Einstellgenauigkeit der Stellgröße noch erhöht werden, so dass das tatsächliche Bremsmoment des Retarders einem auf der Bremskennlinie liegenden angeforderten Soll-Bremsmoment genau entspricht oder allenfalls geringfügig davon abweicht. Besonders vorteilhaft ist weiterhin, dass einem elektronischen Bremsmanagement exakte Daten über das aktuell eingestellte Bremsmoment zur Verfügung gestellt werden können.

Daraus ergibt sich die Möglichkeit, wie weiterhin vorgesehen sein kann, dass im Fahrbetrieb ein aktuelles Soll-Bremsmoment, das aus für einen Bremsbetrieb des Fahrzeugs relevanten Betriebsparametern ermittelt wird, über einen korrigierten Soll-Strom, der eine dem Hydraulikkreis des Retarders zugehörige elektrische Ventileinrichtung betätigt, sehr genau eingestellt werden kann, wobei der jeweilige Soll-Strom über die Voreinstellung und den Abgleich der Voreinstellung mit dem Ist-Druck ermittelt wird.

Außerdem kann vorgesehen sein, dass die Voreinstellung wenigstens eine vorgegebene aggregatunabhängige Grundeinstellung und eine vor oder zeitnah mit der Fahrzeuginbetriebnahme für den jeweiligen Retarder ermittelte aggregatespezifische Korrektureinstellung beinhaltet, wobei eine aggregatespezifische Korrektureinstellung, die an einem Prüfstand erfolgt, besonders vorteilhaft ist.

Ausgehend von einer Grundeinstellung, die für alle Aggregate eines Typs einmal ermittelt und fest in der Steuer- und Regeleinheit abgespeichert ist, ermöglicht die aggregatespezifische Korrektur am Prüfstand einen Ausgleich von Fertigungstoleranzen, so dass für alle Aggregate eine gleich hohe Einstellgenauigkeit gewährleistet wird. Die Voreinstellung lässt sich auf einfache Weise in Form von Kennfeldern realisieren, die in der Steuer- und Regeleinheit abgelegt werden.

Dazu kann vorgesehen sein, dass die Grundeinstellung ein Strom-Referenzkennfeld beinhaltet, in dem ein Zusammenhang zwischen einem elektrischen Referenz-Strom zur Bestromung einer elektrischen Ventileinrichtung des Retarders und dem Soll-Bremsmoment des Retarders festgelegt ist, und dass die Grundeinstellung ein Druck-Referenzkennfeld beinhaltet, in dem ein Zusammenhang zwischen einem hydraulischen Referenz-Druck im Hydraulikkreis des Retarders und dem Soll-Bremsmoment des Retarders festgelegt ist.

Außerdem kann vorgesehen sein, dass die Korrektureinstellung ein Strom-Korrekturkennfeld zur aggregatespezifischen Korrektur des Strom-Referenzkennfeldes und ein Druck-Korrekturkennfeld zur aggregatespezifischen Korrektur des Druck-Referenzkennfeldes beinhaltet.

Durch die explizite Einbeziehung eines Druck-Kennfeldes und eines Druck-Korrekturkennfeldes wird eine genauere Einstellung der Stellgröße für die Retarder-Einstellung erreicht, da der aggregatespezifisch ermittelte Druck bzw. der momentane tatsächliche Druck für die Genauigkeit der Einstellung der Stellgröße zur Erzeugung des Soll-Bremsmomentes entscheidend sind.

Die Einstellgenauigkeit kann dadurch noch weiter gesteigert werden, dass die Korrektureinstellung eine Strom-Korrekturkennlinie und/oder eine Druck-Korrekturkennlinie beinhaltet, in denen eine Temperaturabhängigkeit der Viskosität des Hydrauliköls im Hydraulikkreis des Retarders berücksichtigt wird. Da sich die Viskosität des Öls mit der Temperatur ändert, können Einflüsse durch variierende Volumenströme beim Befüllen/Entleeren des Retarders sowie temperaturabhängige Druckänderungen im Retarder automatisch bei der Einstellung der Stellgröße für die Ventileinrichtung berücksichtigt werden.

Außerdem kann vorgesehen sein, dass eine Drucküberwachung zur Überwachung des hydraulischen Druckes wenigstens im Hydraulikkreis des Retarders vorgesehen ist, die bei einer erkannten unzulässigen Druckabweichung von einer Solldruckvorgabe oder von daraus abgeleiteten Größen eine Fehlerreaktion erzeugt.

Die Druckmessung im Arbeitskreis des Retarders ermöglicht neben einer hohen Genauigkeit bei der Einstellung des Bremsmoments somit auch eine

Überwachung der Funktionsbereitschaft und Betriebssicherheit eines Retarders. Dabei kann die Sollvorgabe durch einen für die Betriebssicherheit des Retarders relevanten zeitlichen Druckverlauf und/oder durch einen oder mehrere Schwellwerte definiert sein.

Sinnvolle Fehlerreaktionen können von Warnmeldungen über Betriebseinschränkungen bis hin zur Abschaltung des Retarders reichen. Erkannte Fehler können dabei beispielsweise abgespeichert und/oder dem Fahrer angezeigt werden. Auch ein Betrieb mit reduzierter Bremsleistung ist möglich.

Wie die Fehlerreaktion genau aussieht, kann mit Hilfe von Randbedingungen entschieden werden. Dies können Informationen über ein Fahrzeuggewicht und/oder eine aktuelle Fahrbahnneigung und/oder eine aktuelle Fahrbahnbeschaffenheit sein. Beispielsweise könnte bei einem leichten Fahrzeug ganz auf den Retarder verzichtet werden, während bei einem schweren Fahrzeug der Retarder eventuell nur in seiner Bremsleistung begrenzt wird. Je nach erkanntem Fehler kann auch ein voller Betrieb des Retarders, jedoch mit einer eingeschränkten Genauigkeit des Bremsmoments und dementsprechend eingeschränktem Bremskomfort sinnvoll sein. Auch Informationen eines Navigationssystems über Fahrbahnneigungen oder Sensordaten über die Fahrbahnbeschaffenheit (Griffigkeit, Ebenheit) können weitere Randbedingungen darstellen.

Bei einem Retarder, der einen gemeinsamen Ölhaushalt mit einem zugeordneten Getriebe aufweist, ist es besonders vorteilhaft, wenn die Drucküberwachung eine Überwachung eines Ölstandes in dem Getriebe mit einschließt. Eine weitere Möglichkeit in Verbindung mit einer Druckmessung im Arbeitskreis des Retarders ist, bei Retardern, die einen gemeinsamen Ölhaushalt mit dem Getriebe besitzen, die Überwachung des Ölstandes im Getriebe. Hierbei kann, abhängig von aktuellen Betriebsbedingungen (Drehzahlen, beabsichtigtes Bremsmoment, Öltemperatur), aus dem Retarder-Öldruck bzw. der Abweichung von einem Soll-Druck ermittelt werden, ob ein Ölmangel im Getriebe vorliegt und gegebenenfalls entsprechende Schutzmaßnahmen einzuleiten sind.

Schließlich kann noch eine Funktionsüberwachung vorgesehen sein, bei der die Funktionstüchtigkeit der Steuerung des Retarders mit Hilfe einer Plausibilitätsprüfung kontrolliert wird, wobei wenigstens der aktuelle hydraulische Druck des Retarders einbezogen wird. Es kann auch vorgesehen sein, dass bei dieser Plausibilitätsprüfung zusätzlich die Öltemperatur berücksichtigt wird. Dieser weitere Aspekt neben einer Drucküberwachung dient der hydraulischen Steuerung des Retarders. Die Überwachung des Öldruckes, eventuell in Verbindung mit einer Öltemperatur oder weiteren Messgrößen, kann zur Plausibilisierung der Funktion der hydraulischen Steuerung dienen.

Es ist auch eine Plausibilisierung der vorhandenen Sensorsignale untereinander möglich. Wird beispielsweise kein Öldruck gemessen, obwohl der Retarder durch die Steuerung aktiviert ist, kann dies auch an einem defekten Drucksensor liegen. Steigt die gemessene Öltemperatur an, so ist davon auszugehen, dass der Drucksensor defekt ist. Bleibt die Öltemperatur aber konstant, dann deutet dies darauf hin, dass der Retarder zwar durch die elektronische Steuerung aktiviert wurde, die hydraulische Steuerung aber einen Defekt hat (z.B. Ventilklemmer) oder zu wenig Öl im System ist.

Eine weitere Aufgabe der Erfindung ist es, eine Vorrichtung zur Einstellung und Ansteuerung eines hydrodynamischen Retarders zu schaffen, mit der bei geringem Kosten- und Konstruktionsaufwand die Einstellgenauigkeit des Bremsmomentes verbessert werden kann.

Die Lösung dieser Aufgabe ergibt sich aus den Merkmalen des unabhängigen Vorrichtungsanspruchs.

Die Erfindung geht diesbezüglich aus von einer Vorrichtung zur Einstellung und Ansteuerung eines hydrodynamischen Retarders eines Kraftfahrzeuges. Die Erfindung sieht zur Lösung der gestellten Aufgabe dabei vor, dass der Retarder einen regelbaren Hydraulikkreis mit wenigstens einem Drucksensor aufweist, und dass dem Hydraulikkreis eine Steuer- und Regeleinheit zugeordnet ist, die einen nicht-flüchtigen Datenspeicher sowie eine Prozessoreinheit aufweist, in der aktuelle Eingangsdaten und gespeicherte Daten verarbeitbar sind, in der aus den verarbeiteten Daten ein Ausgangssignal zur Ansteuerung einer elektrischen Ventileinrichtung und/oder einer Öl-Befüllungseinrichtung des Retarders erzeugbar ist, über die ein vorbestimmtes Soll-Bremsmoment einstellbar ist.

Die Verwendung eines Drucksensors, der den Druck im Arbeitskreis des Retarders misst, ermöglicht es, relativ einfach und kostengünstig eine hohe Einstellgenauigkeit eines Retarder-Bremsmomentes zu erreichen. Diese Druckmessung kann an einem Prüfstand im Rahmen einer Voreinstellung zur Ermittlung einer Stellgröße verwendet werden. Die Voreinstellung kann in Form von Referenz- und Korrekturfeldern in der Steuer- und Regeleinheit gespeichert werden, bei denen der hydraulische Druck berücksichtigt wird.

Die Steuer- und Regeleinheit ist derart ausgebildet, dass sie eine Soll-Bremsmomentvorgabe als Eingangssignal mit Hilfe der Kennfelder und gegebenenfalls einer Regelkorrektur mit dem aktuellen Ist-Druck verarbeitet sowie ein entsprechendes Ausgangssignal für eine Stellgröße des Retarders ausgibt. Im Fahrbetrieb kann der aktuelle Druck im Arbeitskreis gemessen und auf den am Prüfstand aggregatespezifisch ermittelten Solldruck geregelt werden. Daraus kann zur Erzeugung des Soll-Bremsmomentes ein ausgeregelter Soll-Strom erzeugt werden, der beispielsweise ein Proportionalventil betätigt, über das ein Retarderdruck eingestellt wird, der in Kombination mit der Retarderdrehzahl das vorgegebene Soll-Bremsmoment mit hoher Genauigkeit am Retarder erzeugt.

Eine weitere Erhöhung der Einstellgenauigkeit kann mit Hilfe eines Öltemperatursensors erreicht werden, der mit der Steuer- und Regeleinheit signaltechnisch verbunden ist und zusätzlich eine Viskositätskorrektur der Stellgröße ermöglicht.

Zur Verdeutlichung der Erfindung ist der Beschreibung eine Zeichnung eines Ausführungsbeispiels beigefügt.
In dieser zeigt:
- Fig. 1: ein Schema eines Retarderkreislaufs eines hydrodynamischen Retarders mit Druck- und Temperatursensorik, sowie
- Fig. 2: ein Schema zur Bremsmoment-Einstellung des Retarders.

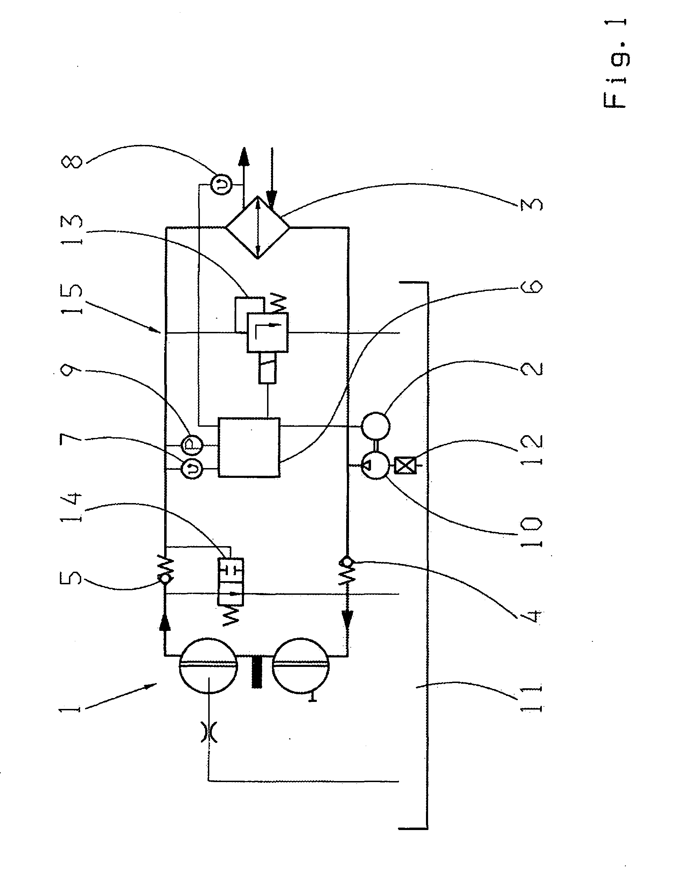

Demnach ist in Fig. 1 ein als Arbeitskreis eines hydrodynamischen Retarders 1 ausgebildeter Retarderkreislauf 15 eines Kraftfahrzeuges dargestellt. Der Aufbau und die Funktionsweise eines derartigen Retarders sind an sich bekannt, so dass hier nur auf die für die Erfindung wesentlichen Bauteile näher eingegangen wird.

Der Arbeitskreis 15 weist zur Ölversorgung eine Pumpe 10 mit einem vorgeschalteten Filter 12 auf, die über einen Elektromotor 2 antreibbar und regelbar ist. Die Pumpe 10 ist aus einem Ölsumpf 11 speisbar. Weiterhin ist ein Wärmetauscher 3 zur Abfuhr der im Retarder 1 in Wärme umgewandelten kinetischen Strömungsenergie vorgesehen. Zur Befüllung und Entleerung des Retarders 1 sind einlassseitig bzw. auslassseitig zwei Rückschlagventile 4, 5 angeordnet, wobei am Retarder-Auslass zusätzlich ein Entleerventil 14 vorgesehen ist, über das der Retarder 1 bedarfsweise vollständig entleerbar ist.

Der Arbeitskreis 15 ist von einer Steuer- und Regeleinheit 6 regelbar. Die Steuer- und Regeleinheit 6 ist mit einem Drucksensor 9 zur Erfassung des hydraulischen Druckes im Arbeitskreis 15 und mit zwei Temperatursensoren 7 sowie 8 zur Erfassung der Öltemperatur im Kreislauf bzw. direkt am Wärmetauscher 3 verbunden. Weiterhin ist die Steuer- und Regeleinheit 6 zur Retardersteuerung über Steuerleitungen mit einem Regelventil 13 und dem Elektromotor 2 verbunden. Das Regelventil 13 ist vorteilhaft als ein elektrisches Proportionalventil ausgebildet, über dessen Bestromung der Retarder 1 steuerbar ist.

Erfindungsgemäß weist die Steuer- und Regeleinheit 6 einen nicht-flüchtigen Datenspeicher sowie eine Prozessoreinheit auf, in der aktuelle Eingangsdaten und gespeicherte Daten verarbeitbar sind, und in der aus den verarbeiteten Daten ein Ausgangssignal zur Ansteuerung des Regelventils 13 erzeugbar ist. Die in Fig. 1 gezeigte Anordnung ermöglicht eine Retardersteuerung sowohl über das Regelventil 13 als auch über den regelbaren Elektromotor 2.

Ein Verfahren gemäß der Erfindung zur Einstellung und Ansteuerung eines hydrodynamischen Retarders eines Kraftfahrzeuges beruht im Wesentlichen auf einer Voreinstellung, bei dem der in einem hydraulischen Arbeitskreis 15 des Retarders gemessene hydraulische Druck berücksichtigt wird.

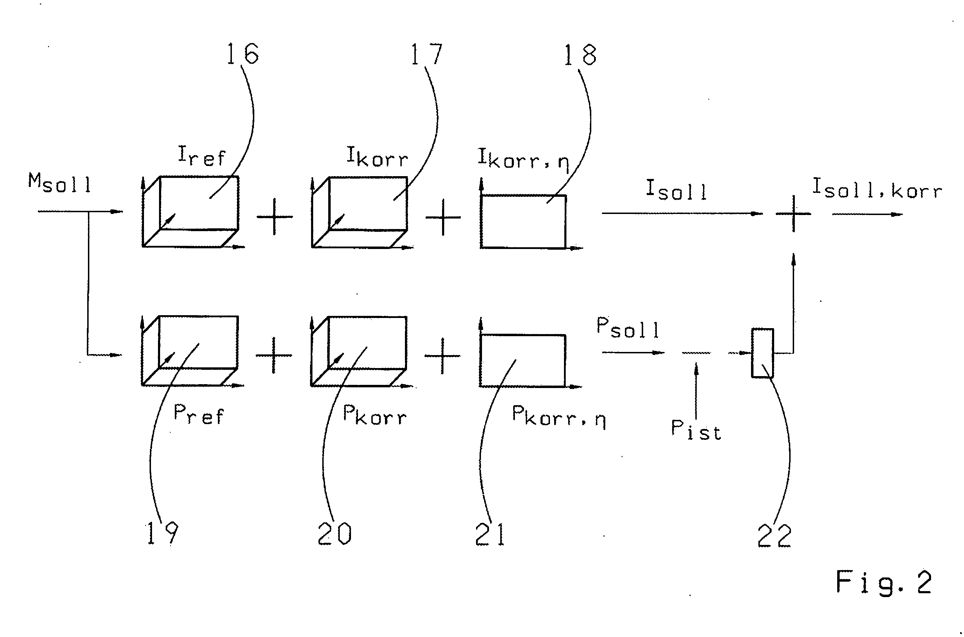

Die Fig. 2 zeigt ein Schema zur Einstellung und Ansteuerung eines Retarders bzw. eines Retarderkreislaufs entsprechend der in der Fig. 1 dargestellten Bauweise, anhand der das erfindungsgemäße Verfahren im Folgenden beschrieben wird:

Demnach wird als Vorgabe in der Retardersteuerung ein Soll-Bremsmoment Mₛₒₗₗ aus relevanten Anforderungen, beispielsweise aus den Bremsmomentanforderungen des Fahrers oder anderer Systeme, ermittelt, und diese Vorgabe gegebenenfalls durch fahrzeug- oder systembedingte Begrenzungen (ABS, Temperaturrückregelung usw.) reduziert. Die Steuer- und Regeleinheit 6 des Retarders 1 beabsichtigt nun diese resultierende Vorgabe, also das Soll-Bremsmoment Mₛₒₗₗ, durch Einstellen eines entsprechenden Stroms am Regelventil 13 durch den Retarder 1 zu erzeugen.

Um die geforderte Genauigkeit zu erreichen, wird aus dem Soll-Bremsmoment M_{Soll} und der aktuellen Retarderdrehzahl ein Strom I_{ref} ermittelt, der sich auf ein Strom-Referenzkennfeld 16 stützt. In dem Strom-Referenzkennfeld 16 ist der Referenzstrom I_{ref} über dem Soll-Bremsmoment Mₛₒₗₗ und der Retarderdrehzahl festgelegt. Dieses Referenzkennfeld 16 wurde zuvor versuchseitig einmal für alle Aggregate ermittelt und ist fest in der Steuer- und Regeleinheit 6 abgespeichert.

Der Referenzstrom I_{ref} des Referenzkennfeldes 16 wird anschließend mit einem Strom-Offset Iₖₒᵣᵣ beaufschlagt, der aus einem aggregatespezifischen Strom-Korrekturkennfeld 17, in dem der Offset Iₖₒᵣᵣ über dem Soll-Bremsmoment Mₛₒₗₗ und der Retarderdrehzahl aufgetragen ist, entnommen ist. Dieses aggregatespezifische Korrekturkennfeld 17 wird für jeden einzelnen Retarder am Prüfstand ermittelt und in der Steuer- und Regeleinheit 6 dauerhaft abgespeichert.

Anschließend wird zusätzlich eine Strom-Korrektur für die temperaturabhängige Viskosität des Öls im Arbeitskreis 15 vorgenommen, durch Verwendung einer fest abgespeicherten Strom-Korrekturkennlinie 18, in der ein weiterer Strom-Offset I_{korr, η} über der Öltemperatur aufgetragen ist. Durch Addition der einzelnen Stromanteile I_{ref}, Iₖₒᵣᵣ sowie I_{korr, η} wird daraus ein Soll-Strom Iₛₒₗₗ ermittelt.

Erfindungsgemäß wird parallel zur Bestimmung des Soll-Stroms Iₛₒₗₗ in gleicher Weise ein Soll-Druck pₛₒₗₗ bestimmt. Dabei wird ein Druck-Referenzkennfeld 19, in dem ein Referenzdruck p_{ref} über dem Soll-Bremsmoment Mₛₒₗₗ und der Retarderdrehzahl festgelegt ist, für alle Aggregate in Steuer- und Regeleinheit 6 gespeichert. Dieser Druck p_{ref} des Referenzkennfeldes 19 wird nun mit einem Druck-Offset pₖₒᵣᵣ beaufschlagt, der aus einem aggregatespezifischen Druck-Korrekturkennfeld 20 entnommen wird, in dem der Druck-Offset pₖₒᵣᵣ über dem Soll-Bremsmoment Mₛₒₗₗ und der Retarderdrehzahl aufgetragen ist. Das aggregatespezifische Korrekturkennfeld 20 wird ebenfalls für jeden einzelnen Retarder am Prüfstand ermittelt und in der Steuer- und Regeleinheit 6 dauerhaft abgelegt.

Zusätzlich wird auch eine Druck-Korrektur der Viskosität des Öls berücksichtigt, die in einer Druck-Korrekturkennlinie 21 fest abgelegt ist, in der ein weiterer Druck-Offset p_{korr, η} über der Öltemperatur aufgetragen ist. Durch Addition der einzelnen Druckanteile p_{ref}, pₖₒᵣᵣ und p_{korr, η} wird der Soll-Druck pₛₒₗₗ ermittelt.

Die Kennfelder bzw. Kennlinien 16 bis 21 stellen eine Voreinstellung des Retarders 1 zur Bremsmoment-Einstellung entsprechend einer vorgegebenen Soll-Bremskennlinie (Bremsmoment gegenüber der Retarderdrehzahl) mit einer Berücksichtigung des Druckes im Arbeitskreis 15 dar.

Der Soll-Druck pₛₒₗₗ kann grundsätzlich als zusätzliche Regelgröße in geeigneter Weise auf den Soll-Strom Iₛₒₗₗ angewendet werden. Erfindungsgemäß wird im Fahrbetrieb ein Abgleich der Soll-Druck-Voreinstellung mit dem gemessenen aktuellen Ist-Druck pᵢₛₜ und der Ausregelung einer eventuell vorhandenen Abweichung durchgeführt. Dabei werden der Soll-Druck pₛₒₗₗ und der Ist-Druck pᵢₛₜ in einem Regler 22 (PID-Regler) verarbeitet, der aus der Differenz der genannten Werte eine Regel-Stellgröße ermittelt, die als weiterer Korrekturwert auf den Soll-Strom Iₛₒₗₗ addiert wird. Der daraus resultierende, korrigierte Soll-Strom I_{soll,korr} wird schließlich an dem Proportional-Regelventil 13 des Retarders 1 als Stellgröße eingestellt.

### Bezugszeichen

- 1: Retarder
- 2: Elektromotor
- 3: Wärmetauscher
- 4: Einlassventil
- 5: Auslassventil
- 6: Steuer- und Regeleinheit
- 7: Temperatursensor
- 8: Temperatursensor
- 9: Drucksensor
- 10: Pumpe
- 11: Ölsumpf
- 12: Filter
- 13: Ventileinrichtung; Regelventil
- 14: Entleerventil
- 15: Hydraulikkreis
- 16: Strom-Referenzkennfeld
- 17: Strom-Korrekturkennfeld
- 18: Strom-Korrekturkennlinie
- 19: Druck-Referenzkennfeld
- 20: Druck-Korrekturkennfeld
- 21: Druck-Korrekturkennlinie
- 22: Regler
- I_{ref}: Referenz-Strom
- Iₖₒᵣᵣ: Strom-Offset
- I_{korr, η}: Strom-Offset für Viskositätseinfluss
- Iₛₒₗₗ: Soll-Strom
- I_{soll, korr}: korrigierter Soll-Strom
- Mₛₒₗₗ: Soll-Bremsmoment
- p_{ref}: Referenz-Druck
- pₖₒᵣᵣ: Druck-Offset
- p_{korr, η}: Druck-Offset für Viskositätseinfluss
- pₛₒₗₗ: Soll-Druck
- Pᵢₛₜ: Ist-Druck

## Patentansprüche

1. Verfahren zur Einstellung und Ansteuerung eines hydrodynamischen Retarders (1) eines Kraftfahrzeuges, bei dem der Retarder (1) einen regelbaren Hydraulikkreis (15) sowie Mittel zur Erfassung des hydraulischen Druckes in dem Hydraulikkreis (15) aufweist, und bei dem wenigstens eine Voreinstellung zur Erzeugung eines einer vorgegebenen Bremsmomentkennlinie folgenden Bremsmomentes erfolgt, die in einer Steuer- und Regeleinheit (6) dauerhaft abgelegt wird und mit Hilfe derer der Retarder (1) im Fahrbetrieb angesteuert wird, **dadurch gekennzeichnet, dass** wenigstens bei der Voreinstellung der hydraulische Druck in dem Hydraulikkreis (15) des Retarders (1) berücksichtigt wird.

2. Verfahren nach Anspruch 1, **dadurch gekennzeichnet, dass** im Fahrbetrieb ein Abgleich zwischen der in der Steuer- und Regeleinheit (6) abgelegten Voreinstellung und einem aktuell im Hydraulikkreis (15) des Retarders (1) gemessenen hydraulischen Ist-Druck (pᵢₛₜ) erfolgt.

3. Verfahren nach Anspruch 1 oder 2, **dadurch gekennzeichnet , dass** im Fahrbetrieb ein jeweiliges Soll-Bremsmoment (Mₛₒₗₗ), das aus für einen Bremsbetrieb des Fahrzeugs relevanten Betriebsparametern ermittelt wird, im Wesentlichen über einen korrigierten Soll-Strom (I_{soll, korr}) eingestellt wird, der eine dem Hydraulikkreis (15) des Retarders (1) zugehörige elektrische Ventileinrichtung (13) betätigt, wobei der jeweilige Soll-Strom (I_{soll,korr}) über die Voreinstellung und den Abgleich der Voreinstellung mit dem Ist-Druck (pᵢₛₜ) ermittelt wird.

4. Verfahren nach zumindest einem der Ansprüche 1 bis 3, **dadurch gekennzeichnet, dass** die Voreinstellung wenigstens eine vorgegebene aggregateunabhängige Grundeinstellung und eine vor oder zeitnah mit der Fahrzeuginbetriebnahme für den jeweiligen Retarder ermittelte aggregatespezifische Korrektureinstellung beinhaltet.

5. Verfahren nach Anspruch 4, **dadurch gekennzeichnet, dass** die aggregatespezifische Korrektureinstellung an einem Prüfstand erfolgt.

6. Verfahren nach zumindest einem der Ansprüche 1 bis 5, **dadurch gekennzeichnet, dass** die Grundeinstellung ein Strom-Referenzkennfeld (16) beinhaltet, in dem ein Zusammenhang zwischen einem elektrischen Referenz-Strom (I_{ref}) zur Bestromung der elektrischen Ventileinrichtung (13) des Retarders (1) und dem Soll-Bremsmoment (Mₛₒₗₗ) des Retarders (1) festgelegt ist, und dass die Grundeinstellung ein Druck-Referenzkennfeld (19) beinhaltet, in dem ein Zusammenhang zwischen einem hydraulischen Referenz-Druck (p_{ref}) im Hydraulikkreis (15) des Retarders (1) und dem Soll-Bremsmoment (Mₛₒₗₗ) des Retarders (1) festgelegt ist.

7. Verfahren nach zumindest einem der Ansprüche 1 bis 6, **dadurch gekennzeichnet, dass** die Korrektureinstellung ein Strom-Korrekturkennfeld (17) zur aggregatespezifischen Korrektur des Strom-Referenzkennfeldes (16) und ein Druck-Korrekturkennfeld (20) zur aggregatespezifischen Korrektur des Druck-Referenzkennfeldes(19) beinhaltet.

8. Verfahren nach zumindest einem der Ansprüche 1 bis 7, **dadurch gekennzeichnet, dass** die Korrektureinstellung eine Strom-Korrekturkennlinie (18) und/oder eine Druck-Korrekturkennlinie (21) beinhaltet, in denen eine Temperaturabhängigkeit der Viskosität des Hydrauliköles im Hydraulikkreis des Retarders (1) berücksichtigt wird.

9. Verfahren nach zumindest einem der Ansprüche 1 bis 8, **dadurch gekennzeichnet, dass** eine Drucküberwachung zur Überwachung des hydraulischen Druckes wenigstens im Hydraulikkreis (15) des Retarders (1) vorgesehen ist, die bei einer erkannten unzulässigen Druckabweichung von einer Sollvorgabe oder von daraus abgeleiteten Größen eine Fehlerreaktion erzeugt.

10. Verfahren nach Anspruch 9, **dadurch gekennzeichnet, dass** die Sollvorgabe durch einen für die Betriebssicherheit des Retarders (1) relevanten zeitlichen Druckverlauf und/oder durch einen oder mehrere Schwellwerte definiert ist.

11. Verfahren nach Anspruch 9 oder 10, **dadurch gekennzeichnet, dass** die Drucküberwachung bei einem Retarder, der einen gemeinsamen Ölhaushalt mit einem zugeordneten Getriebe aufweist, eine Überwachung eines Ölstandes in dem Getriebe einschließt.

12. Verfahren nach zumindest einem der Ansprüche 9 bis 11, **dadurch gekennzeichnet, dass** die Fehlerreaktion wenigstens eine den Retarder (1) betreffende Maßnahme aus der Gruppe Warnmeldung, Betriebseinschränkung und Abschaltung umfasst.

13. Verfahren nach zumindest einem der Ansprüche 9 bis 12, **dadurch gekennzeichnet, dass** bei der Bestimmung der Fehlerreaktion mindestens eine Randbedingung berücksichtigt wird, die für ein Bremsverhalten des Kraftfahrzeuges relevant ist.

14. Verfahren nach Anspruch 13, **dadurch gekennzeichnet, dass** als Randbedingungen Informationen über ein Fahrzeuggewicht und/oder eine aktuelle Fahrbahnneigung und/oder eine aktuelle Fahrbahnbeschaffenheit zur Verfügung gestellt werden.

15. Verfahren nach zumindest einem der Ansprüche 1 bis 14, **dadurch gekennzeichnet, dass** eine Funktionsüberwachung vorgesehen ist, bei der die Funktionstüchtigkeit der Steuerung des Retarders (1) mit Hilfe einer Plausibilitätsprüfung kontrolliert wird, die wenigstens den aktuellen hydraulischen Druck (pᵢₛₜ) des Retarders einbezieht.

16. Verfahren nach Anspruch 15, **dadurch gekennzeichnet, dass** bei der Plausibilitätsprüfung zusätzlich die Öltemperatur berücksichtigt wird.

17. Vorrichtung zur Einstellung und Ansteuerung eines hydrodynamischen Retarders (1) eines Kraftfahrzeuges, **dadurch gekennzeichnet, dass** der Retarder (1) einen regelbaren Hydraulikkreis (15) mit wenigstens einem Drucksensor (9) aufweist, dass dem Hydraulikkreis (15) eine Steuer- und Regeleinheit (6) zugeordnet ist, die einen nicht-flüchtigen Datenspeicher sowie eine Prozessoreinheit aufweist, in der aktuelle Eingangsdaten und gespeicherte Daten verarbeitbar sind, und in der aus den verarbeiteten Daten ein Ausgangssignal zur Ansteuerung einer elektrischen Ventileinrichtung (13) und/oder einer Öl-Befüllungseinrichtung des Retarders (1) erzeugbar ist, über die ein vorbestimmtes Soll-Bremsmoment (Mₛₒₗₗ) einstellbar ist.

18. Vorrichtung nach Anspruch 17, **dadurch gekennzeichnet, dass** der Hydraulikkreis (15) wenigstens einen Öltemperatursensor (7,8) aufweist.

## Claims

1. Method for setting and actuating a hydrodynamic retarder (1) of a motor vehicle, in which the retarder (1) has an adjustable hydraulic circuit (15) and means for detecting the hydraulic pressure in the hydraulic circuit (15), and in which at least one presetting for generating a braking torque which follows a predefined braking torque characteristic curve is carried out, which presetting is permanently stored in a control and regulator unit (6) and with the help of which the retarder (1) is actuated in driving operation, **characterized in that** the hydraulic pressure in the hydraulic circuit (15) of the retarder (1) is taken into account at least in the case of the presetting.

2. Method according to Claim 1, **characterized in that**, in driving operation, a comparison is made between the presetting stored in the control and regulator unit (6) and an actual hydraulic pressure (Pact) currently measured in the hydraulic circuit (15) of the retarder (1).

3. Method according to Claim 1 or 2, **characterized in that**, in driving operation, a respective setpoint braking torque (Mₛₑₜₚ) , which is determined from operating parameters which are relevant for a braking operation of the vehicle, is set substantially via a corrected setpoint current (I_{setp, corr}), which activates an electric valve device (13) which belongs to the hydraulic circuit (15) of the retarder (1), wherein the respective setpoint current (I_{setp, corr}) is determined via the presetting and the comparison of the presetting with the actual pressure (p_{act}).

4. Method according to at least one of Claims 1 to 3, **characterized in that** the presetting contains at least one predefined system-independent base setting and a correction setting which is system-specific and is determined for the respective retarder before or at the time when the vehicle is put into service.

5. Method according to Claim 4, **characterized in that** the system-specific correction setting is carried out on a test stand.

6. Method according to at least one of Claims 1 to 5, **characterized in that** the base setting contains a current reference characteristic field (16), in which a relationship between an electric reference current (I_{ref}) for supplying current to the electric valve device (13) of the retarder (1) and the setpoint braking torque (Mₛₑₜₚ) of the retarder (1) is specified, and **in that** the base setting contains a pressure reference characteristic field (19), in which a relationship between a hydraulic reference pressure (p_{ref}) in the hydraulic circuit (15) of the retarder (1) and the setpoint braking torque (Mₛₑₜₚ) of the retarder (1) is specified.

7. Method according to at least one of Claims 1 to 6, **characterized in that** the correction setting contains a current correction characteristic field (17) for system-specific correction of the current reference characteristic field (16) and a pressure correction characteristic field (20) for system-specific correction of the pressure reference characteristic field (19).

8. Method according to at least one of Claims 1 to 7, **characterized in that** the correction setting contains a current correction characteristic curve (18) and/or a pressure correction characteristic curve (21), in which a temperature dependency of the viscosity of the hydraulic oil in the hydraulic circuit of the retarder (1) is taken into account.

9. Method according to at least one of Claims 1 to 8, **characterized in that** a pressure monitoring for monitoring of the hydraulic pressure at least in the hydraulic circuit (15) of the retarder (1) is provided, which generates an error reaction in the case of a detected inadmissible pressure deviation from a setpoint definition or from variables derived therefrom.

10. Method according to Claim 9, **characterized in that** the setpoint definition is defined by a temporal pressure profile which relevant to the operational reliability of the retarder (1) and/or by one or more threshold values.

11. Method according to Claim 9 or 10, **characterized in that** the pressure monitoring encompasses a monitoring of an oil level in the transmission in the case of a retarder which has a shared oil supply with an assigned transmission.

12. Method according to at least one of Claims 9 to 11, **characterized in that** the error reaction encompasses at least one measure relating to the retarder (1) from the group comprising warning message, operating restriction and switching off.

13. Method according to at least one of Claims 9 to 12, **characterized in that**, when determining the error reaction, at least one framework condition is taken into account which is relevant to a braking behaviour of the motor vehicle.

14. Method according to Claim 13, **characterized in that** information about a vehicle weight and/or a current road surface inclination and/or a current road surface condition is made available as framework conditions.

15. Method according to at least one of Claims 1 to 14, **characterized in that** a function monitoring is provided in the case of which the functionality of the control of the retarder (1) is checked with the help of a plausibility check which involves at least the current hydraulic pressure (p_{act}) of the retarder.

16. Method according to Claim 15, **characterized in that** the oil temperature is additionally taken into account in the case of the plausibility check.

17. Device for setting and actuating a hydrodynamic retarder (1) of a motor vehicle, **characterized in that** the retarder (1) has an adjustable hydraulic circuit (15) with at least one pressure sensor (9), **in that** the hydraulic circuit (15) is assigned a control and regulator unit (6), which has a non-volatile data memory and a processor unit in which current input data and stored data can be processed, and in which, from the processed data, an output signal for actuating an electric valve device (13) and/or an oil filling device of the retarder (1) can be generated, via which a predetermined setpoint braking torque (Mₛₑₜₚ) can be set.

18. Device according to Claim 17, **characterized in that** the hydraulic circuit (15) has at least one oil temperature sensor (7, 8).

## Revendications

1. Procédé d'ajustement et de commande d'un ralentisseur (1) hydrodynamique d'un véhicule automobile, dans lequel le ralentisseur (1) présente un circuit hydraulique réglable (15) ainsi que des moyens de détection de la pression hydraulique dans le circuit hydraulique (15), et dans lequel au moins un pré-ajustement pour générer un couple de freinage suivant une courbe caractéristique de couple de freinage prédéfinie a lieu, lequel est mémorisé durablement dans une unité de commande et de régulation (6) et à l'aide duquel le ralentisseur (1) est commandé lors du fonctionnement de conduite, **caractérisé en ce qu'**au moins lors du pré-ajustement, la pression hydraulique dans le circuit hydraulique (15) du ralentisseur (1) est prise en compte.

2. Procédé selon la revendication 1, **caractérisé en ce que** dans le fonctionnement de conduite, un rapprochement entre le pré-ajustement mémorisé dans l'unité de commande et de régulation (6) et une pression hydraulique effective (p_{effective}) actuellement mesurée dans le circuit hydraulique (15) du ralentisseur (1) a lieu.

3. Procédé selon la revendication 1 ou 2, **caractérisé en ce que** dans le fonctionnement de conduite, un couple de freinage de consigne respectif (M_{consigne}), qui est déterminé d'après les paramètres de fonctionnement significatifs pour un fonctionnement de freinage du véhicule, est réglé essentiellement par l'intermédiaire d'un courant de consigne corrigé (I_{consigne,corr}), qui actionne un dispositif de soupape électrique (13) appartenant au circuit hydraulique (15) du ralentisseur (1), dans lequel le courant de consigne respectif (I_{consigne,corr}) est déterminé par l'intermédiaire du pré-ajustement et du rapprochement du pré-ajustement avec la pression effective (p_{effective}).

4. Procédé selon au moins une des revendications 1 à 3, **caractérisé en ce que** le pré-ajustement contient au moins un ajustement de base indépendamment du groupe prédéfini et un ajustement de correction spécifique au groupe déterminé avant ou au moment de la mise en marche du véhicule pour le ralentisseur respectif.

5. Procédé selon la revendication 4, **caractérisé en ce que** l'ajustement de correction spécifique au groupe a lieu sur un banc d'essai.

6. Procédé selon au moins une des revendications 1 à 5, **caractérisé en ce que** l'ajustement de base contient un champ caractéristique de référence de courant (16), dans lequel un rapport entre un courant de référence électrique (I_{réf}) pour alimenter électriquement le dispositif de soupape électrique (13) du ralentisseur (1) et le couple de freinage de consigne (M_{consigne}) du ralentisseur (1) est déterminé, et **en ce que** l'ajustement de base contient un champ caractéristique de référence de pression (19), dans lequel un rapport entre une pression hydraulique de référence (p_{réf}) dans le circuit hydraulique (15) du ralentisseur (1) et le couple de freinage de consigne (M_{consigne}) du ralentisseur (1) est déterminé.

7. Procédé selon au moins une des revendications 1 à 6, **caractérisé en ce que** l'ajustement de correction contient un champ caractéristique de correction de courant (17) en vue d'une correction spécifique au groupe du champ caractéristique de référence de courant (16) et un champ caractéristique de correction de pression (20) en vue d'une correction spécifique au groupe du champ caractéristique de référence de pression (19).

8. Procédé selon au moins une des revendications 1 à 7, **caractérisé en ce que** l'ajustement de correction contient une ligne de correction de courant (18) et/ou une ligne de correction de pression (21), dans lesquelles une dépendance à la température de la viscosité de l'huile hydraulique dans le circuit hydraulique du ralentisseur (1) est prise en compte.

9. Procédé selon au moins une des revendications 1 à 8, **caractérisé en ce qu'**une surveillance de pression pour surveiller la pression hydraulique au moins dans le circuit hydraulique (15) du ralentisseur (1) est prévue, laquelle génère une réaction d'erreur en cas d'écart de pression inadmissible reconnu par rapport à une prescription de consigne ou des grandeurs qui en sont déduites.

10. Procédé selon la revendication 9, **caractérisé en ce que** la prescription de consigne est définie par une courbe de pression temporelle significative pour la sécurité de fonctionnement du ralentisseur (1) et/ou par une ou plusieurs valeurs seuils.

11. Procédé selon la revendication 9 ou 10, **caractérisé en ce que** la surveillance de pression sur un ralentisseur, qui présente une consommation d'huile commune avec une transmission associée, inclut une surveillance d'un niveau d'huile dans la transmission.

12. Procédé selon au moins une des revendications 9 à 11, **caractérisé en ce que** la réaction d'erreur comprend au moins une mesure concernant le ralentisseur (1) dans le groupe incluant un message d'erreur, une limitation de fonction et une mise hors tension.

13. Procédé selon au moins une des revendications 9 à 12, **caractérisé en ce que** lors de la détermination de la réaction d'erreur, au moins une condition aux limites est prise en compte, laquelle est significative pour un comportement de freinage du véhicule automobile.

14. Procédé selon la revendication 13, **caractérisé en ce que** comme conditions aux limites, des informations relatives à un poids du véhicule et/ou une inclinaison actuelle de la voie de circulation et/ou une qualité actuelle de la voie de circulation sont fournies.

15. Procédé selon au moins une des revendications 1 à 14, **caractérisé en ce qu'**une surveillance des fonctions est prévue, dans laquelle l'aptitude à fonctionner de l'unité de commande du ralentisseur (1) est contrôlée à l'aide d'un essai de plausibilité, qui inclut au moins la pression hydraulique actuelle (p_{effective}) du ralentisseur.

16. Procédé selon la revendication 15, **caractérisé en ce que** lors de l'essai de plausibilité, la température de l'huile est en outre prise en compte.

17. Dispositif d'ajustement et de commande d'un ralentisseur (1) hydrodynamique d'un véhicule automobile, **caractérisé en ce que** le ralentisseur (1) présente un circuit hydraulique réglable (15) avec au moins un capteur de pression (9), **en ce que** le circuit hydraulique (15) est coordonné à une unité de commande et de régulation (6), qui présente une mémoire de données non volatile ainsi qu'une unité de processeur, dans laquelle des données d'entrée actuelles et des données mémorisées peuvent être traitées, et dans laquelle, à partir des données traitées, un signal de sortie pour commander un dispositif de soupape électrique (13) et/ou un dispositif de remplissage d'huile du ralentisseur (1) peut être généré, par l'intermédiaire duquel un couple de freinage de consigne (M_{consigne}) prédéfini peut être réglé.

18. Dispositif selon la revendication 17, **caractérisé en ce que** le circuit hydraulique (15) présente au moins un capteur de température d'huile (7, 8).
